**Europäisches Patentamt**

**European Patent Office**

**Office européen des brevets**

(11) Veröffentlichungsnummer: **0 253 265 B1**

(12) **EUROPÄISCHE PATENTSCHRIFT**

(45) Veröffentlichungstag der Patentschrift: **12.06.91**

(51) Int. Cl.⁵: **H02M 5/45**, H02M 7/515, H02M 7/527

(21) Anmeldenummer: **87109711.9**

(22) Anmeldetag: **06.07.87**

(54) **Verfahren zur Inbetriebnahme eines Umrichterantriebes aus einem Stromzwischenkreisumrichter mit Phasenfolgelöschung.**

(30) Priorität: **18.07.86 DE 3624388**

(43) Veröffentlichungstag der Anmeldung:
**20.01.88 Patentblatt 88/03**

(45) Bekanntmachung des Hinweises auf die Patenterteilung:
**12.06.91 Patentblatt 91/24**

(84) Benannte Vertragsstaaten:
**AT BE CH DE FR GB LI NL SE**

(56) Entgegenhaltungen:
**EP-A- 0 142 808**
**DE-A- 3 237 488**
**FR-A- 2 532 796**
**GB-A- 1 376 758**

**PATENT ABSTRACTS OF JAPAN, Band 6, Nr. 155 (E-125)[1033], 7. August 1982; & JP-A-57 75 579 (TOKYO SHIBAURA DENKI K.K.) 12-05-1982**

**IEEE TRANSACTIONS ON INDUSTRY APPLICATIONS, Band IA-16, Nr. 1, Januar-Februar 1980, Seiten 103-110, IEEE, New York, US; W.**

**LIENAU et al.: "Power converters for feeding asynchronous traction motors of single-phase AC vehicles"**

**IEEE PROCEEDINGS SECTION A à I, Band 131, Nr. 5, Teil B, September 1984, Seiten 195-202, Old Woking, Surrey, GB; S.R. BOWES et al.: "PWM switching strategies for current-fed inverter drives"**

(73) Patentinhaber: **Siemens Aktiengesellschaft**
**Wittelsbacherplatz 2**
**W-8000 München 2(DE)**

(72) Erfinder: **Heinle, Georg, Dipl.-Ing.**
**Moorbachweg 14**
**W-8520 Erlangen(DE)**

## Beschreibung

Die Erfindung bezieht sich auf ein Verfahren zur Inbetriebnahme eines Umrichterantriebes für einen elektromotorischen Verbraucher, insbesondere eine Asynchronmaschine, dessen Wechselrichterteil mit Kommutierunmgskondensatoren zur Phasenfolgelöschung versehen ist und der über einen Zwischenkreis mit einem von einer Zwischenkreisinduktivität eingeprägten Gleichstrom aus einem steuerbaren Gleichrichter gespeist wird, wobei kurzzeitig vor bzw. unmittelbar mit Beginn der Wechselrichtertaktung eine Ladespannung an einem, mehreren oder allen Kommutierungskondensatoren angelegt und anschließend der Zwischenkreisstrom von einem niedrigen Anfangswert auf den gewünschten Sollwert erhöht wird.

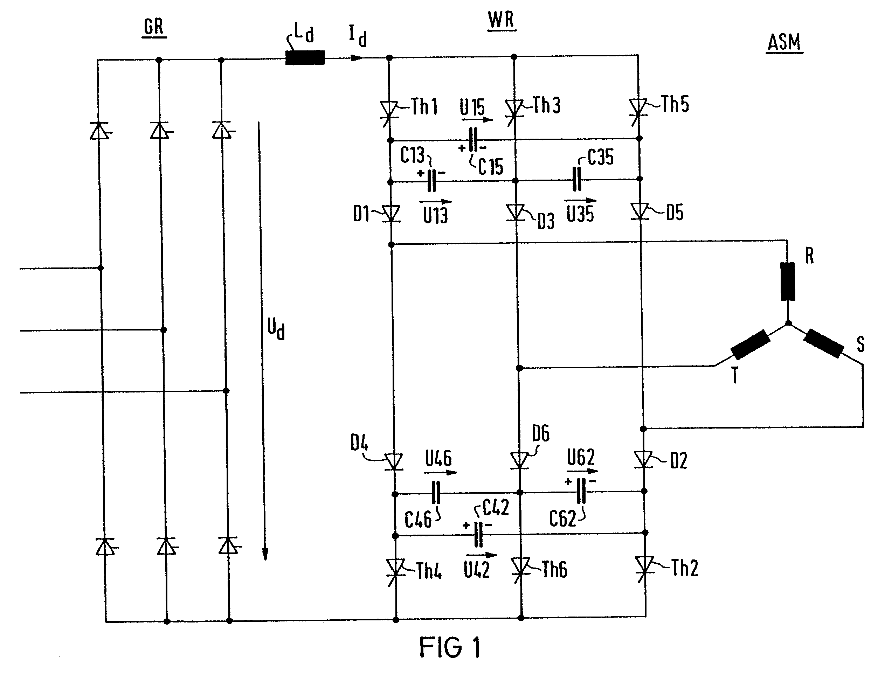

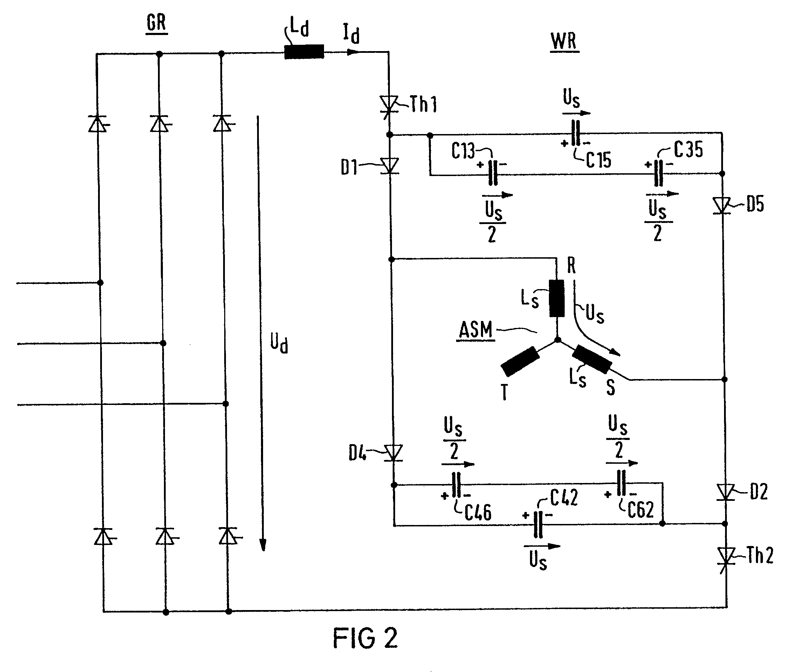

Der bekannte, selbstgeführte Umrichter, auf den sich die Erfindung bezieht, ist in Figur 1 dargestellt. Der Verlauf der Kommutierungen im Wechselrichterteil WR ist z.B. in ETZ-A, Band 96 (1975), Heft 11 auf den Seiten 520 bis 523 beschrieben. Zur weiteren Erläuterung der Funktionsweise zeigt Figur 2 einen Teil der Schaltung in Form eines Ersatzschaltbildes für den Moment der Kondensatoraufladung.

Die Kommutierungen im Wechselrichterteil WR des Umrichters werden durch den Betrag und das Vorzeichen der Ladungen der sechs in Figur 1 dargestellten Kommutierungskondensatoren C13, C35, C15, C46, C62 und C42 ermöglicht, die zwischen je zwei Phasen in der oberen und unteren Wechselrichterhälfte angeordnet sind. Es läßt sich zeigen, daß es nicht notwendig ist, vor der Inbetriebnahme eines solchen selbstgeführten Wechselrichters alle Kommutierungskondensatoren in den Zustand aufzuladen, der dem normalen Betriebspunkt entspricht. Vielmehr ist es ausreichend, z.B. einen Kondensator vorzuladen und/oder sicherzustellen, daß sich alle Kondensatoren nach dem Einschalten des Wechselrichters von selbst aufladen können. Hierzu muß in der Regel allerdings der Wert des Zwischenkreisstromes zu Beginn der Inbetriebnahme so klein gehalten werden, daß dieser mit Hilfe der ersten, unter Umständen noch recht kleinen Kondensatorladungen schon kommutierbar ist. Im Laufe der folgenden Kommutierungen verteilt sich diese Anfangsladung nicht nur auf die übrigen Kondensatoren; vielmehr wird insbesondere durch das allmähliche Vergrößern des Zwischenkreisstromes und mittels wechselrichterinterner Umschwingvorgänge der Ladungszustand aller Kondensatoren so verbessert, daß schließlich der normale Betriebszustand erreicht wird. Der maximal zulässige Wert des Zwischenkreisstromes am Anfang der Inbetriebnahme kann natürlich umso größer gewählt werden, je genauer die Voraufladung dem für den normalen Betriebspunkt notwendigen Ladezustand entspricht.

Zur Voraufladung sind bereits einige Schaltungen, aber auch Arbeitsverfahren, die keine zusätzlichen schaltungstechnischen Maßnahmen benötigen, bekannt geworden.

So beschreibt die DE-OS 29 52 324 eine Vorrichtung, mit der nur ein Kommutierungskondensator in einer Brückenhälfte mit der richtigen Polarität voraufgeladen wird. Die Ladespannung wird hierzu über einen zweipoligen Schalter und einen Begrenzungswiderstand bzw. über zwei Halbleiterschalter mit je einem Begrenzungswiderstand direkt am Ausgang des steuerbaren Gleichrichters abgegriffen.

Von besonderem Interesse sind jedoch Arbeitsverfahren, die einen zusätzlichen Bauteileaufwand vermeiden und insbesondere mit den Steuer- und Regeleinrichtungen auskommen, die bei Zwischenstromkreisumrichtern bereits vorhanden sind.

So ist aus der ED-H-31 118 ein Verfahren zum "Antakten" eines Stromrichters mit Phasenfolgelöschung bekannt. Der Wechselrichter speist dabei am Ausgang eines Stromzwischenkreisumrichters eine Asynchronmaschine. Mit der Inbetriebnahme wird der maximal zulässige Zwischenkreisstrom zunächst auf einen kleinen Wert begrenzt und der Wechselrichter gleichzeitig mit einer erhöhten Frequenz getaktet. Der Wert dieser Frequenz ergibt sich aus der Schwingfrequenz eines aus den Kommutierungskondensatoren und den Motorstranginduktivitäten gebildeten Schwingkreises. Nachdem sich eine ausreichend große Spannung an den Kondensatoren aufgebaut hat, werden anschließend der Zwischenkreisstrom bzw. die Frequenz auf die für den Normalbetrieb vorgesehenen Werte erhöht bzw. reduziert. Die im Zwischenkreis natürlicherweise am Ausgang des eingangsseitigen Gleichstromstellers bzw. steuerbaren Gleichrichters vorhandene Spannung wird hierbei im Moment der Inbetriebnahme zu einer ersten Vorladung der Kondensatoren ausgenutzt.

In einem weiteren, aus der japanischen Schrift mit der Anmeldungsnummer 51-109 950 in Verbindung mit "Patent Abstracts of Japan", Band 2, Nr. 70, Seite 2575E 78 bekanntgewordenen Verfahren wird vor der Inbetriebnahme des Wechselrichters dieser kurzzeitig an seinem Eingang mit einer hohen Spannung beaufschlagt. Hierzu wird der Sollwert für die Regeleinrichtung des eingangsseitigen steuerbaren Gleichrichters vorübergehend sprungartig erhöht. Die Voraufladung der Kommutierungskondensatoren wird durch gleichzeitiges Zünden je eines Ventils der am positiven bzw. negativen Potential angeschlossenen Wechselrichterhälfte ermöglicht. Nach dem Wegnehmen der Vorladespannung und dem Abklingen des Zwischenkreisstromes wird der Wechselrichterbetrieb mit einem von einem kleinen Anfangswert bis auf den gewünschten Endwert anwachsenden Zwischenkreisstromsollwert aufgenommen.

Es hat sich jedoch in der Praxis gezeigt, daß eine Voraufladung der Kommutierungskondensatoren bzw. eine Inbetriebnahme des Umrichters mit begrenztem Zwischenkreisstrom nicht in allen Fällen ausreichend ist, um den stationären Arbeitspunkt des Umrichters zu erreichen. Vielmehr ist u.U. die maximal an die Kommutierungskondensatoren anlegbare Ladespannung so gering, daß die dadurch bewirkte Ladung den im Moment der Inbetriebnahme auftretenden Anfangswert des Zwischenkreisstromes nicht kommutieren kann. Zudem werden bei allen bekannten Vorrichtungen und Verfahren die Auswirkungen der Inbetrieb-bzw. Wiederinbetriebnahme des Umrichters auf die angeschlossene Arbeitsmaschine außer acht gelassen.

Die Aufgabe der Erfindung besteht darin, den insbesondere im Moment der Inbetriebnahme nach längerem bzw. Wiederinbetriebnahme nach vorübergehendem Stillstand des Wechselrichters auftretenden Anfangswert des Zwischenkreisstromes zu reduzieren. Hierdurch soll ein sicheres Anfahren des Wechselrichters insbesondere auch dann ermöglicht werden, wenn die an den Kommutierungskondensatoren zum Aufbau deren Kommutierungsfähigkeit anliegende Ladespannung besonders im Startaugenblick recht klein ist. Das erfindungsgemäße Verfahren soll universell einsetzbar und insbesondere unabhängig davon sein, auf welche Weise einer der, einige bzw. alle Kommutierungskondensatoren vor der Inbetriebnahme voraufgeladen worden sind bzw. mit und während der Inbetriebnahme aufgeladen werden. Ferner sollen während der Inbetriebnahme störende Einflüsse auf die Arbeitsmaschine vermieden werden.

Die Aufgabe wird dadurch gelöst, daß die Kommutierungen im Wechselrichterteil synchronisiert mit den Kommutierungen im steuerbaren Gleichrichter erfolgen. Weitere bevorzugte Ausgestaltungen des erfindungsgemäßen Verfahrens sind den Unteransprüchen zu entnehmen. Insbesondere lassen sich die Merkmale der Ansprüche 3 bzw. 7 vorteilhaft auch unabhängig von den Merkmalen des Anspruchs 1 anwenden.

Anhand der Schaltung gemäß Figur 1, des Ersatzschaltbildes gemäß Figur 2 und zweier Verläufe des Zwischenkreisstromes gemäß Figur 3 wird die Erfindung nachfolgend näher erläutert.

Es ist ein Prinzip aller Vorladeverfahren, daß die zur Aufladung der Kommutierungskondensatoren verfügbare Ladespannung durch einen induktiven Spannungsteiler bestimmt wird. Gemäß Figur 2, bei der beispielhaft die Zündung der Thyristoren TH1 und TH2 dargestellt ist, teilt sich die Ausgangsspannung $U_d$ des steuerbaren Gleichrichters GR dabei über der Zwischenkreisinduktivität $L_d$ und den beiden in Reihe liegenden Streuinduktivitäten $L_S$ der Motorphasen R und S der vom Umrichter gespeisten Asynchronmaschine auf. Der an diesen Stranginduktivitäten auftretende Spannungsabfall $U_S$ führt zur Aufladung der Kommutierungskondensatoren C15, C35, C13 bzw. C46, C62, C42 in der oberen bzw. unteren Wechselrichterhälfte.

Die Kommutierungsfähigkeit des Wechselrichters wird insbesondere im Augenblick der Inbetriebnahme bestimmt durch den Ladezustand dieser Kondensatoren, d.h. durch den an den beiden Streuinduktivitäten maximal erreichbaren Teil $U_S$ der Zwischenkreisspannung $U_d$. Dieser Wert wiederum begrenzt den maximal zulässigen Anfangswert des Zwischenkreisstromes $I_d$. Dessen Wert darf höchstens so groß sein, daß er durch die von der Teilspannung $U_S$ aufgebrachte Kondensatorladung noch kommutierbar ist.

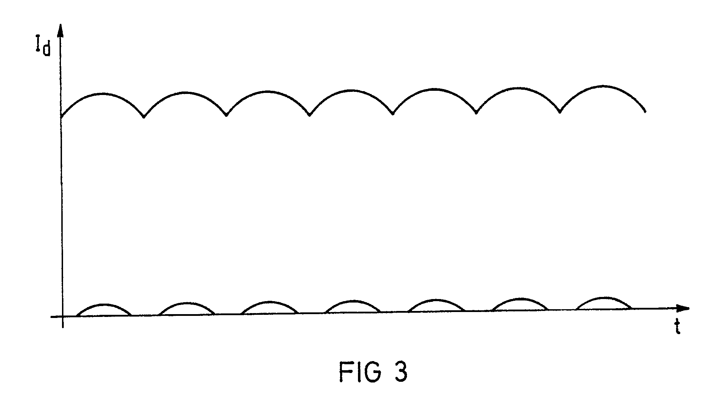

Während bei Normmotoren der Wert jeder Streuinduktivität in der Regel 15 % der Nennimpedanz nicht unterschreitet, kann er insbesondere bei Sondermotoren sehr viel kleiner sein. Entsprechend klein fällt dann auch die Ladespannung für die Kommutierungskondensatoren aus. Besonders in solchen Fällen muß der maximal zulässige Anfangswert des Zwischenkreisstromes unter Umständen so klein gewählt werden, daß der Strom aufgrund der durch die Kommutierungen im eingangsseitigen Gleichrichter hervorgerufenen Kuppen lücken würde. Diese Stromkuppen sind in der Figur 3 deutlich zu erkennen. Dabei sind zwei mögliche Verläufe des Zwischenkreisstromes dargestellt, von denen einer im Lückbereich liegt. Bei lückendem Zwischenkreisstrom versagen jedoch die bekannten Vorladeverfahren. Fällt nämlich eine Stromlücke gerade mit einer Kommutierung zusammen, so kann dadurch die sich gerade im Aufbau befindliche Ladung des entsprechenden Kondensators wieder verlorengehen und folgende Kommutierungen fehlschlagen.

Das erfindungsgemäße Verfahren der Synchronisation der Schaltvorgänge im Wechselrichter mit denen des Gleichrichters läßt dagegen eine ideale Anpassung des maximal zulässigen Anfangsstromes im Zwischenkreis an den Wert der tatsächlich erzeugbaren Vorladespannung zu. Dieser ist nun nicht mehr durch das Erreichen des Lückbereiches nach unten begrenzt. Ein sicherer Wechselrichteranlauf ist nun in jedem Fall auch bei sehr niedrigen Vorladespannungen möglich.

In weiterer Ausgestaltung des erfindungsgemäßen Verfahrens ist es besonders vorteilhaft, wenn die Kommutierungen der Maschinenstrangströme jeweils in dem Bereich stattfinden, in dem der Zwischenkreisstrom aufgrund der Kommutierungen im eingangsseitigen Gleichrichter ein Maximum hat.

Wie in der bereits zitierten ETZ-A auf den Seiten 521 und 522 im Detail dargestellt ist, läßt sich der Kommutierungsverlauf bei einem Umrichter gemäß Figur 1 in zwei Abschnitte einteilen. Der erste beginnt mit der Zündung des in der Kommutierungsrichtung folgenden Thyristors. Auf diesen kommutiert der Zwischenkreisstrom nach einer vernachlässigbar kurzen Zeit, so daß der bisher stromführende Thyristor beinahe schlagartig gesperrt wird. Dies wird durch die Ladung des zwischen den beiden beteiligten Phasen liegenden Kondensator bewirkt. Der Stromfluß in den Zuleitungen der elektrischen Maschine wird dadurch zunächst nicht beeinfluß, da die Kommutierungskondensatoren durch den Zwischenkreisstrom erst umgeladen werden müssen. Der zweite Abschnitt, und damit die eigentliche Stromkommutierung in den Maschinensträngen beginnt dann, wenn die Spannung des zwischen den beiden Wechselrichterphasen liegenden Kondensators ihr Vorzeichen umgekehrt und einen Wert erreicht, welcher der durch die elektrische Maschine zwischen den beiden Phasen eingeprägten verketteten Spannung entspricht. Bei stillstehender Maschine ist dementsprechend der Zeitpunkt des Vorzeichenwechsels der Kondensatorspannung maßgebend, da keine elektromotorische Kraft induziert wird.

Diese Synchronisation der Schaltvorgänge ist besonders vorteilhaft, da der Zwischenkreisstrom während des ersten Kommutierungsabschnittes noch ansteigt. Hierdurch wird dessen Zeitdauer verlängert, was der Schonzeit des zu Beginn dieses Abschnittes gelöschten Thyristors zugute kommt. Ferner findet die Strangkommutierung bei hohem Strom statt, so daß der Kondensator am Ende der Kommutierung den größtmöglichen Ladezustand aufweist. Hierdurch wird das Anlaufverhalten des Umrichters besonders begünstigt, da die Kommutierungskondensatoren schneller die für den stationären Betrieb des Wechselrichters benötigte Gesamtladung erhalten.

Schließlich kann die erfindungsgemäße Synchronisation der Schaltvorgänge im Wechselrichter mit denen im Gleichrichter auch mit einem Bruchteil der Frequenz geschehen, mit der Kommutierungen im Gleichrichter ablaufen, bzw. auch aperiodisch. Es können also zwischen zwei synchronisierten Kommutierungen des Wechselrichters, falls nötig, beliebig viele Kommutierungen des Gleichrichters erfolgen. Dies wird dadurch ermöglicht, daß der nach Ablauf einer Kommutierung erreichte Ladezustand der Kondensatoren durch die Schaltung "gespeichert" wird, so daß die Kommutierungen nicht unmittelbar aufeinander folgen müssen. Aus diesem Grund sind im allgemeinen für die zeitliche Folge der Wechselrichterkommutierungen bis auf die Bauelementeschonzeiten prinzipiell keine Bedingungen einzuhalten. Insbesondere muß die Kommutierungsfrequenz des Wechselrichters nicht auf schnelle wechselrichterinterne Ladungsumschwingvorgänge abgestimmt werden, an denen die Kommutierungskondensatoren und die Maschinenwicklungen als kapazitive und induktive Energiespeicher beteiligt sind.

Weisen die Kommutierungskondensatoren z.B. vor einer Wiederinbetriebnahme des Wechselrichters noch eine Restladung auf, so kann es unter Umständen notwendig sein, den Anfangswert des Zwischenkreisstromes bis weit in den Lückbereich hinein zu begrenzen.

Aus diesem Grund ist es gemäß einer weiteren Ausgestaltung der Erfindung besonders vorteilhaft, alle Kondensatoren vor einer Inbetriebnahme vollständig zu entladen. Hierdurch werden definierte Startbedingungen geschaffen und der maximal zulässige Zwischenkreisstrom muß nicht noch zusätzlich reduziert werden. Dies hat weiterhin den Vorteil, daß der Wechselrichter schneller den stationären Betriebszustand erreicht. Da keine internen Ladungsausgleichsvorgänge stattfinden, können sich die Kondensatorladungen ungestört mit jeder weiteren Kommutierung bis hin zum stationären Endwert aufbauen. Diese Kondensatorentladungen werden besonders vorteilhaft durchgeführt, indem alle Thyristoren des Wechselrichters und zwei in Reihe liegende Ventile des Gleichrichters gezündet werden. Zur Vermeidung von Überströmen muß allerdings ein aufgrund eines vorangegangenen Umrichterbetriebes unter Umständen noch vorhandener Zwischenkreisstrom abgeklungen sein und die von der eventuell noch auslaufenden Asynchronmaschine zwischen den Klemmen induzierten Motorspannungen einen vorgegebenen Grenzwert unterschritten haben. Dieser liegt in der Regel in der Größenordnung von 10 % der Motornennspannung.

Es ist auch denkbar, die Maßnahme der Kondensatorentladung unabhängig von der Synchronisation der Wechsel- und Gleichrichterkommutierungen anzuwenden. Dies hat den Vorteil, daß unter Umständen der maximal zulässige Anfangswert des Zwischenkreisstromes trotz relativ kleiner Ladespannung bereits von Beginn der Inbetriebnahme an größer gewählt werden kann.

In einer weiteren Ausgestaltung der Erfindung ist es besonders vorteilhaft, wenn die Inbetriebnahme des Wechselrichters nicht mit einer festen Kommutierungsrichtung erfolgt. Vielmehr kann dabei die Kommutierungsrichtung zyklisch gewechselt werden. Hierzu werden von dem im Ausgangszustand gezündeten Ventilpaar ein oder mehrere Kommutierungen z.B. in der der Motorrechtsdrehung entsprechenden Richtung durchgeführt. Nach Umkehrung der Kommutierungsrichtung wird über den ursprünglichen Ausgangszustand hinweg mit der gleichen Anzahl an Kommutierungen in Motorlinksdrehung kommutiert, bis die Kommutierungsrichtung erneut gewechselt wird. Auch mit einem solchen zyklischen Vorgang um den Kommutierungsausgangszustand kann der Umrichter ohne Einschränkungen in seinen normalen Betriebszustand übergeführt werden, indem sich die Kommutierungskondensatoren bis zum stationären Betriebspunkt aufladen. In der durch den Umrichter betriebenen Asynchronmaschine bewirken die dadurch entstehenden Pendelmomente keine Motordrehung. Dies ist insbesondere dann von Vorteil, wenn bei einer Wiederinbetriebnahme der Motor noch nicht voll ausgelaufen ist bzw. noch bei kleinem Schlupf mit annähernd Kommutierungsfrequenz dreht. Vorteilhaft ist ferner die in diesem Fall mögliche Flußbildung in der Maschine. Es ist auch hier denkbar und unter Umständen vorteilhaft, die Maßnahme des zyklischen Kommutierungsrichtungswechsels unabhängig von der Synchronisation der Wechselrichter-und Gleichrichterkommutierungen und der Kondensatorentladungen vor der Inbetriebnahme anzuwenden.

Das erfindungsgemäße Verfahren ermöglicht es somit, in besonders vorteilhafter Weise einen Umrichterantrieb mit einer über einen Stromzwischenkreisumrichter mit Phasenfolgelöschung betriebenen Asynchronmaschine in Betrieb zu nehmen.

**Ansprüche**

1. Verfahren zur Inbetriebnahme eines Umrichterantriebes für einen elektromotorischen Verbraucher, insbesondere eine Asynchronmaschine (ASM), dessen als dreiphasige Drehstrombrückenschaltung ausgebildeter Wechselrichterteil (WR) mit Kommutierungskondensatoren zur Phasenfolgelöschung versehen ist und der über einen Zwischenkreis mit einem von einer Zwischenkreisinduktivität ($L_d$) eingeprägten Gleichstrom ($I_d$) aus einem steuerbaren Gleichrichter (GR) gespeist wird, wobei kurzzeitig vor bzw. unmittelbar mit Beginn der Wechselrichtertaktung eine Ladespannung ($U_S$) an einem, mehreren oder allen Kommutierungskondensatoren angelegt wird, die sich infolge einer Freigabe von Zündimpulsen für die Ventile (TH1, ..., TH6) des Wechselrichters als Spannungsabfall einstellt, und anschließend der Zwischenkreisstrom ($I_d$) von einem niedrigen Anfangswert auf den gewünschten Sollwert erhöht wird, **dadurch gekennzeichnet,** daß die Kommutierungen im Wechselrichterteil (WR) synchronisiert mit den Kommutierungen im steuerbaren Gleichrichter (GR) erfolgen.

2. Verfahren nach Anspruch 1, **dadurch gekennzeichnet**, daß eine Kommutierung im Wechselrichter so auf eine Kommutierung im eingangsseitigen, steuerbaren Gleichrichter synchronisiert ist, daß im Bereich des Maximums der durch die Kommutierungen im eingangsseitigen Gleichrichter bedingten Kuppen des Zwischenkreisstromes ($I_d$ )der Ausgangsstrom des Wechselrichters von einer Phase auf die andere kommutiert.

3. Verfahren zur Inbetriebnahme eines Umrichterantriebes für einen elektromotorischen Verbraucher, insbesondere eine Asynchronmaschine (ASM), dessen als dreiphasige Drehstrombrückenschaltung ausgebildeter Wechselrichterteil (WR) mit Kommutierungskondensatoren zur Phasenfolgelöschung versehen ist und der über einen Zwischenkreis mit einem von einer Zwischenkreisinduktivität ($L_d$) eingeprägten Gleichstrom ($I_d$) aus einem steuerbaren Gleichrichter gespeist wird, wobei kurzzeitig vor bzw. unmittelbar mit Beginn der Wechselrichtertaktung eine Ladespannung ($U_S$) an einem, mehreren oder allen Kommutierungskondensatoren angelegt wird, die sich infolge einer Freigabe von Zündimpulsen für die Ventile (TH1, ..., TH6) des Wechselrichters als Spannungsabfall einstellt, und anschließend der Zwischenkreisstrom ($I_d$) von einem niedrigen Anfangswert auf den gewünschten Sollwert erhöht wird, **dadurch gekennzeichnet ,** daß vor dem Anlegen der Ladespannung alle Kommutierungskondensatoren entladen werden, wobei zum Entladen der Kommutierungskondensatoren alle Ventile des Wechselrichters und zwei in Reihe liegende Ventile des eingangsseitigen Gleichrichters gezündet werden, wenn der Zwischenkreisstrom abgeklungen ist und die Spannungen zwischen den Phasen des Verbrauchers am Ausgang des Wechselrichters kleiner als ein vorgegebener Grenzwert sind.

4. Verfahren nach Anspruch 3, **dadurch gekennzeichnet,** daß die Kommutierungen im Wechselrichter (WR) synchronisiert mit den Kommutierungen im steuerbaren Gleichrichter (GR) erfolgen.

5. Verfahren nach Anspruch 4, **dadurch gekennzeichnet**, daß eine Kommutierung im Wechselrichter so auf eine Kommutierung im eingangsseitigen, steuerbaren Gleichrichter synchronisiert ist, daß im Bereich des Maximums der durch die Kommutierungen im eingangsseitigen Gleichrichter bedingten Kuppen des Zwischenkreisstromes ($I_d$) der Ausgangsstrom des Wechselrichters von einer Phase auf die andere kommutiert.

6. Verfahren zur Inbetriebnahme eines Umrichterantriebes für einen elektromotorischen Verbraucher, insbesondere eine Asynchronmaschine (ASM), dessen als dreiphasige Drehstrombrückenschaltung ausgebildeter Wechselrichterteil (WR) mit Kommutierungskondensatoren zur Phasenfolgelöschung versehen ist und der über einen Zwischenkreis mit einem von einer Zwischenkreisinduktivität ($L_d$) eingeprägten Gleichstrom ($I_d$) aus einem steuerbaren Gleichrichter (GR) gespeist wird, wobei kurzzeitig vor bzw. unmittelbar mit Beginn der Wechselrichtertaktung eine Ladespannung ($U_S$) an einem, mehreren oder allen Kommutierungskondensatoren angelegt wird, die sich infolge einer Freigabe von Zündimpulsen für die Ventile (TH1, ..., TH6) des Wechselrichters als Spannungsabfall einstellt, und anschließend der Zwischenkreisstrom ($I_d$) von einem niedrigen Anfangswert auf den gewünschten Sollwert erhöht wird, **dadurch gekennzeichnet,** daß die Kommutierungsrichtung zyklisch gewechselt wird, indem mit ein oder mehreren Kommutierungen in der einer Motorrechtsdrehung entsprechenden Richtung entsprechenden Anzahl von Kommutierungen über den Ausgangszustand hinweg in die einer Motorlinksdrehung entsprechenden Richtung kommutiert wird, wobei die Asynchronmaschine (ASM) nicht anläuft.

7. Verfahren nach Anspruch 6, **dadurch gekennzeichnet,** daß die Anzahl der Kommutierungen vom Ausgangszustand aus in der einen und der anderen Richtung eins ist.

8. Verfahren nach Anspruch 6 oder 7, **dadurch gekennzeichnet,** daß die Kommutierungen im Wechselrichterteil (WR) synchronisiert mit den Kommutierungen im steuerbaren Gleichrichter (GR) erfolgen.

9. Verfahren nach Anspruch 8, **dadurch gekennzeichnet,** daß eine Kommutierung im Wechselrichter so auf eine Kommutierung im eingangsseitigen, steuerbaren Gleichrichter synchronisiert ist, daß im Bereich des Maximums der durch die Kommutierungen im eingangsseitigen Gleichrichter bedingten Kuppen des Zwischenkreisstromes ($I_d$) der Ausgangsstrom des Wechselrichters von einer Phase auf die andere kommutiert.

10. Verfahren nach einem der Ansprüche 6, 7, 8 oder 9, **dadurch gekennzeichnet,** daß vor dem Anlegen der Ladespannung alle Kommutierungskondensatoren entladen werden.

11. Verfahren nach Anspruch 10, **dadurch gekennzeichnet,** daß zum Entladen der Kommutierungskondensatoren alle Ventile des Wechselrichters und zwei in Reihe liegende Ventile des eingangsseitigen Gleichrichters gezündet werden, wenn der Zwischenkreisstrom Null ist und die Spannungen zwischen den Phasen des Verbrauchers am Ausgang des Wechselrichters kleiner als ein vorgegebener Grenzwert sind.

## Claims

1. Method for starting the operation of a converter drive for an electric motor load, in particular an asynchronous machine (ASM), with the inverter part (WR) of the said converter drive being constructed as a three-phase rotary current bridge circuit and being provided with commutation capacitors for phase sequence quenching and fed by way of an intermediate circuit with a direct current ($I_d$) from a controllable rectifier (GR), which direct current ($I_d$) is influenced by an intermediate circuit inductance (Ld), a charging voltage (US) being applied shortly before, or directly at, the start of the inverter clocking, to one, several or all of the commutation capacitors, which charging voltage ($U_S$), as a result of the release of firing pulses for the valves (TH1,..., TH6) of the inverter, appears as voltage drop, and subsequently the intermediate circuit current ($I_d$) is raised from a low initial value to the desired reference value, **characterised in that** the commutations in the inverter part (WR) take place in synchronised manner with the commutations in the controllable rectifier (GR).

2. Method according to claim 1, **characterised in that** a commutation in the inverter is synchronised with a commutation in the controllable rectifier on the input side, so that, in the region of the maximum of the peaks caused in the intermediate circuit current ($I_d$) by the commutations in the rectifier on the input side, the output current of the inverter commutates from one phase to the other.

3. Method for starting the operation of a converter drive for an electric motor load, in particular an asynchronous machine (ASM), with the inverter part (WR) of the said converter drive being constructed as a three-phase rotary current bridge circuit and being provided with commutation capacitors for phase sequence quenching and fed by way of an intermediate circuit with a direct current ($I_d$) from a controllable rectifier (GR), which direct current ($I_d$) is influenced by an intermediate circuit inductance (Ld), a charging voltage (US) being applied shortly before, or directly at, the start of the inverter clocking, to one, several or all of the commutation capacitors, which charging voltage ($U_S$), as a result of the release of firing pulses for the valves (TR1,..., TH6) of the inverter, appears as voltage drop, and subsequently the intermediate circuit current ($I_d$) is raised from a low initial value to the desired reference value, **characterised in that,** before the charging voltage is applied, all of the commutation capacitors are discharged, all of the valves of the inverter and two series-connected valves of the rectifier on the input side being fired for discharging the commutation capacitors, if the intermediate circuit current has decayed and the voltages between the phases of the load at the output of the inverter are less than a pre-determined limit value.

4. Method according to claim 3, **characterised in that** the commutations in the inverter (WR) take place in synchronised manner with the commutations in the controllable rectifier (GR).

5. Method according to claim 4, **characterised in that** a commutation in the inverter is synchronised with a commutation in the controllable rectifier on the input side, so that, in the region of the maximum of the peaks caused in the intermediate circuit current ($I_d$) by the commutations in the rectifier on the input side, the output current of the inverter commutates from one phase to the other.

6. Method for starting the operation of a converter drive for an electric motor load, in particular an asynchronous machine (ASM), with the inverter part (WR) of the said converter drive being constructed as a three-phase rotary current bridge circuit and being provided with commutation capacitors for phase sequence quenching and fed by way of an intermediate circuit with a direct current ($I_d$) from a controllable rectifier (GR), which direct current ($I_d$) is influenced by an intermediate circuit inductance ($L_d$), a charging voltage (US) being applied shortly before, or directly at, the start of the inverter clocking, to one, several or all of the commutation capacitors, which charging voltage ($U_S$), as a result of the release of firing pulses for the valves (TH1,..., TH6) of the inverter, appears as voltage drop, and subsequently the intermediate circuit current ($I_d$) is raised from a low initial value to the desired reference value, **characterised in that** the commutation direction is changed cyclically by commutating with a number of commutations corresponding to one or several commutations in the direction corresponding to the clockwise rotation of a motor, past the starting state, into a direction corresponding to the anti-clockwise rotation of a motor, without the asynchronous motor (ASM) starting up.

7. Method according to claim 6, **characterised in that** the number of commutations from the starting state in the one direction and in the other direction is one.

8. Method according to claim 6 or 7, **characterised in that** the commutations in the inverter part (WR) take place in synchronised manner with the commutations in the controllable rectifier (GR).

9. Method according to claim 8, **characterised in that** a commutation in the inverter is synchronised with a commutation in the controllable rectifier on the input side so that, in the region of the maximum of the peaks caused in the intermediate circuit current ($I_d$) by the commutations in the rectifier on the input side, the output current of the inverter commutates from one phase to the other.

10. Method according to one of claims 6, 7, 8 or 9, **characterised in that,** before the charging voltage is applied, all of the commutation capacitors are discharged.

11. Method according to claim 10, **characterised in that,** for discharging the commutation capacitors, all of the valves of the inverter and two series-connected valves of the rectifier on the input side are fired, if the intermediate circuit current is zero and the voltages between the phases of the load at the output of the inverter are less than a pre-determined limit value.

**Revendications**

1. Procédé pour la commande ou la mise en service d'un dispositif de commande à convertisseur statique pour un appareil d'utilisation à moteur électrique, notamment une machine asynchrone (ASM), dont la partie onduleur (WR), agencée sous la forme d'un circuit en pont triphasé, est équipée de condensateurs de commutation pour supprimer l'ordre des phases, et qui est alimentée, au moyen d'un circuit intermédiaire, par un courant continu ($I_d$) injecté par une inductance ($L_d$) du circuit intermédiaire, à partir d'un redresseur commandable (GR), et dans lequel peu avant ou directement au début de la commande cadencée de l'onduleur, une tension de charge ($U_S$) est appliquée, à un, à plusieurs ou à tous les condensateurs de commutation, laquelle tension de charge s'établit en tant que chute de tension par suite d'une libération d'impulsions d'amorçage pour les valves (TH1, ..., TH6) de l'onduleur, alors qu'ensuite le courant ($I_d$) du circuit intermédiaire est accru depuis une valeur initiale faible à la valeur de consigne désirée, caractérisé par le fait que les commutations dans la partie onduleur (WR) s'effectuent d'une manière synchronisée avec les commutations dans le redresseur commandable (GR).

2. Procédé suivant la revendication 1, caractérisé par le fait qu'une commutation dans l'onduleur est synchronisée avec une commutation dans le redresseur commandable situé côté entrée de telle sorte qu'au voisinage du maximum des sommets du courant ($I_d$) du circuit intermédiaire, conditionnés par les commutations dans le redresseur situé côté entrée, le courant de sortie de l'onduleur est commuté d'une phase à l'autre.

3. Procédé pour la mise en service d'un dispositif de commande à convertisseur statique pour un appareil d'utilisation à moteur électrique, notamment une machine asynchrone (ASM), dont la partie onduleur (WR) agencée sous la forme d'un circuit en pont triphasé, est équipée de condensateurs de commutation pour supprimer l'ordre des phases, et qui est alimentée, au moyen d'un circuit intermédiaire, par un courant continu ($I_d$) injecté par une inductance ($L_d$) du circuit intermédiaire, à partir d'un redresseur commandable (GR), et dans lequel peu avant ou directement lors du début de la cadence et de l'onduleur, une tension de charge ($U_S$) est appliquée, à un, à plusieurs ou à tous les condensateurs de commutation, laquelle tension de charge s'établit en tant que chute de tension par suite d'une libération d'impulsions d'amorçage pour les valves (TH1, ..., TH6) de l'onduleur, alors qu'ensuite le courant ($I_d$) du circuit intermédiaire est accru depuis une valeur initiale faible à la valeur de consigne désirée, caractérisé par le fait qu'avant l'application de la tension de charge, tous les condensateurs de commutation sont déchargés, auquel cas, pour décharger ces condensateurs, toutes les valves de l'onduleur et deux valves, branchées en série, du redresseur situé côté entrée sont amorcées lorsque le courant du circuit intermédiaire s'est évanoui et que les tensions entre les phases de l'appareil d'utilisation sont, à la sortie de l'onduleur, inférieures à une valeur limite prédéterminée.

4. Procédé suivant la revendication 3, caractérisé par le fait que les commutations dans l'onduleur (WR) s'effectuent d'une manière synchronisée avec les commutations dans le redresseur commandable (GR).

5. Procédé suivant la revendication 4, caractérisé par le fait qu'une commutation dans l'onduleur est synchronisée avec une commutation dans le redresseur commandable situé côté entrée de telle sorte qu'au voisinage du maximum des sommets du courant ($I_d$) du circuit intermédiaire, conditionnés par les commutations dans le redresseur situé côté entrée, le courant de sortie de l'onduleur est commuté d'une phase à l'autre.

6. Procédé pour la mise en service d'un dispositif de commande à convertisseur statique pour un appareil d'utilisation à moteur électrique, notamment une machine asynchrone (ASM), dont la partie onduleur (WR) agencée sous la forme d'un circuit en pont triphasé, est équipée de condensateurs de commutation pour supprimer l'ordre des phases, et qui est alimenté, au moyen d'un circuit intermédiaire, par un courant continu ($I_d$) injecté par une inductance ($L_d$) du circuit intermédiaire, à partir d'un redresseur commandable (GR), et dans lequel peu avant ou directement lors du début de la cadence et de l'onduleur, une tension de charge ($U_S$) est appliquée, à un, à plusieurs ou à tous les condensateurs de commutation, laquelle tension de charge s'établit en tant que chute de tension par suite d'une libération d'impulsions d'amorçage pour les valves (TH1, ..., TH6) de l'onduleur, alors qu'ensuite le courant ($I_d$) du circuit intermédiaire est accru depuis une valeur initiale faible à la valeur de consigne désirée, caractérisé par le fait que le sens de commutation est inversé cycliquement par une opération de commutation qui est réalisée dans la direction correspondant à une rotation à gauche du moteur, au moyen d'une ou de plusieurs commutations faisant partie du nombre de commutations correspondant à une rotation à droite du moteur, au-delà de l'état de départ, la machine asynchrone (ASM) ne commençant pas à tourner.

7. Procédé suivant la revendication 6, caractérise par le fait que le nombre des commutations à partir de l'état de départ est égal a un, dans une direction et dans l'autre.

8. Procédé suivant la revendication 6 ou 7, caractérisé par le fait que les commutations dans la partie onduleur (WR) s'effectuent d'une manière synchronisée avec les commutations dans le redresseur commandable (GR).

9. Procédé suivant la revendication 8, caractérisé par le fait qu'une commutation dans l'onduleur est synchronisée avec une commutation dans le redresseur commandable situé côté entrée, de telle sorte qu'au voisinage du maximum des sommets du courant ($I_d$) du circuit intermédiaire, conditionnés par les commutations dans le redresseur situé côté entrée, le courant de sortie de l'onduleur est commuté d'une phase à l'autre.

10. Procédé suivant l'une des revendications 6, 7, 8 ou 9, caractérisé par le fait qu'avant l'application de la tension de charge, tous les condensateurs de commutation sont déchargés.

11. Procédé suivant la revendication 10, caractérisé par le fait que pour décharger les condensateurs de commutation, toutes les valves de l'onduleur et deux valves, branchées en série, du redresseur situé côté entrée sont amorcées lorsque le courant du circuit intermédiaire est nul et que les tensions entre les phases de l'appareil d'utilisation, à la sortie de l'onduleur, sont inférieures à une valeur limite prédéterminée.

FIG 1

FIG 2

FIG 3